# EUROPEAN PATENT APPLICATION

(11) **EP 3 575 772 A1**
(43) Date of publication of application: **04.12.2019**
(21) Application number: 19159237.7
(22) Date of filing: 26.02.2019
(51) Int. Cl.: G01N 3/40, G01N 3/42

(54) **HARDNESS TESTER**

(30) Priority: 28.05.2018 JP 2018101382
(71) Applicant: Shimadzu Corporation, Kyoto-shi Kyoto 604-8511 (JP)
(72) Inventor: SUZUKI, Yoshinori, Kyoto-shi,, Kyoto 604-8511 (JP)
(74) Representative: Müller-Boré & Partner Patentanwälte PartG mbB

(57) **Abstract**

Problem to be Solved

To provide a hardness tester capable of easily adjusting the inclination of the body of the tester.

Solution

An image processing section 92, a level determining section 93, a level adjusting section 94, and a display control section 95 serving as function modules of programs are stored in memory 91 of a main unit 56 of a personal computer 50. The level determining section 93 receives input from a level 68 disposed inside a table of a body portion 1 and determines the degree of inclination of the body portion 1. The level adjusting section 94 creates and outputs signals for driving motors 65 connected to leg portions 61 in response to an operation request from a user via an input unit.

## Description

### BACKGROUND OF THE INVENTION

### Field of the Invention

The present invention relates to hardness testers for measuring hardness of samples based on the size of indentations formed in the samples.

### Description of the Related Art

Typical tests for evaluating hardness of materials include the Vickers hardness test using Vickers indenters (JIS Z 2244) and the Knoop hardness test using Knoop indenters (JIS Z 2251). In these two tests, an indenter is pushed into a sample with a predetermined test force, and the size of an indentation left in the sample is measured from the diagonal length to calculate the hardness of the sample. In such hardness testers, the condition of the sample surface can be visually checked through lenses or can be checked using images captured by a camera and displayed on a monitor (see Patent Literatures 1 and 2).

### Citation List

### Patent Literature

Patent Literature 1
   Japanese Patent Laid-Open No. 2015-158478
Patent Literature 2
   Japanese Patent Laid-Open No. 2005-121416

### SUMMARY OF THE INVENTION

### Technical Problem

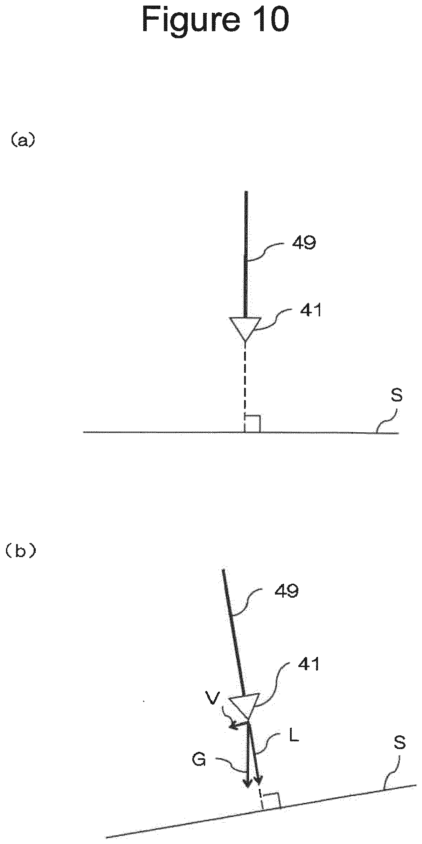

Figure 10 is a schematic view illustrating the inclination of the body of a tester and forces acting on an indenter 41.

In the hardness tester, the indenter needs to be perpendicularly pushed into a surface of a sample from the viewpoint of test accuracy. Thus, as illustrated in Figure 10, the indenter 41 is attached to the body of the tester via a turret such that an indenter shaft 49 is perpendicular to a surface S of a stage on which the sample is placed. On the other hand, if the body of the hardness tester is inclined, the indenter shaft 49 would be inclined with respect to gravity G. That is, even when the indenter shaft 49 is perpendicular to the surface S of the stage, the direction along which test force acts does not correspond to the direction of gravity G, and gravity G acting on the indenter 41 is decomposed into a component L in a direction along which the indenter shaft extends and a component V perpendicular to the direction along which the indenter shaft extends (see Figure 10(b)). If tests are continuously performed while the body of the tester is inclined, stress in directions other than the direction along which the indenter shaft extends continuously acts on the indenter 41 and the indenter shaft 49, and the indenter shaft 49, which is perpendicular to the surface S of the stage, would be inclined. As a result, the shape of the indentation left when the indenter 41 is pushed into the sample would be affected, leading to poor test accuracy.

In a typical hardness tester, four leg portions, specifically, two each at the front and at the rear, are disposed on the bottom surface of the body of the tester to support the body of the tester. The leg portions are extended and contracted with respect to the body of the tester to adjust the level of the body in the front-back and left-right directions. Since it is difficult for users to determine the inclination of the body of the tester based on a visual check, it is recommended that horizontal level adjustment of the body be regularly performed while a precision level using a bubble tube with a sensitivity of 0.05 mm/m or 0.1 mm/m is placed on the stage from which the sample is removed. If the horizontal level is not checked using the precision level, the users would not notice the inclination of the body of the tester, and the tests are likely to be continuously performed while the body of the tester is inclined.

Since the users need to manually extend and contract the leg portions to perform level adjustment, the accuracy in the level adjustment is affected by differences among individuals. Moreover, in a case where the extension and contraction of the leg portions are performed manually, the users need to lift up the body of the tester to reach and handle the leg portions, resulting in a complicated work. Furthermore, the weight of the body of the tester is heavy (for example, 60 to 80 kg), and thus lifting the body of the tester is a considerable physical burden on the workers.

The present invention has been devised to solve the above-described problems, and has an object of providing a hardness tester capable of easily adjusting the inclination of the body of the tester.

### Solution to Problem

In accordance with the invention according to claim 1, a hardness tester, for evaluating a characteristic of a sample placed on a stage disposed in a body portion by pushing an indenter into the sample with a predetermined test force, includes a plurality of leg portions disposed on a bottom surface of the body portion, motors each connected to one of the plurality of leg portions to change a length of each of the plurality of leg portions, an inclination detector configured to detect inclination of the body portion, and a control unit including a level adjusting section and a motor control section, the level adjusting section determining a degree of inclination of the body portion based on a value detected by the inclination detector and creating a control signal for the motors to perform level adjustment of the body portion, the motor control section being configured to drive the motors based on the control signal output from the level adjusting section to perform the level adjustment of the body portion.

In accordance with the invention according to claim 2, which is dependent on the hardness tester according to claim 1, the control unit displays information about the inclination of the body portion based on the value detected by the inclination detector on a display.

In accordance with the invention according to claim 3, which is dependent on the hardness tester according to claim 2, the control unit includes a communication section configured to output the value detected by the inclination detector to an external monitoring device via a network.

### Advantageous Effects of Invention

In accordance with the invention according to claims 1 to 3, the hardness tester includes the inclination detector, and the degree of inclination of the body portion can be determined based on the value detected by the inclination detector. This enables the inclination of the body portion to be monitored. Consequently, tests in which the body portion is inclined can be prevented from being performed. Moreover, the hardness tester includes the motors configured to change the lengths of the leg portions, and performs the level adjustment of the body portion by creating the control signal for the motors to perform level adjustment of the body portion and by driving the motors based on the control signal. Thus, commands to drive the motors can be created and output based on the monitored information about the inclination to accurately perform the level adjustment of the body portion. Furthermore, the heights of the leg portions can be changed by the motors to allow automatic level adjustment, leading to a reduction in the workload of users.

In accordance with the invention according to claim 3, the value detected by the inclination detector can be output to the external monitoring device via the network. Thus, the inclination of the body of the tester can be remotely monitored. This results in an improvement in work efficiency of maintenance and inspection of the tester.

### BRIEF DESCRIPTION OF THE DRAWINGS

Figure 1 is a schematic front view of a hardness tester according to the present invention;
Figure 2 is a perspective view of a body portion 1 of the hardness tester according to the present invention;
Figure 3 illustrates the arrangement of objective lenses and the like supported by a turret 40;
Figure 4 is a schematic view illustrating the configuration regarding inclination detection and level adjustment of the body portion 1;
Figure 5 is a block diagram illustrating a main control system of the hardness tester according to the present invention;
Figure 6 is a flow chart illustrating the procedure of the level adjustment of the body portion 1;
Figure 7 is an example of a level adjustment screen displayed on a display 55;
Figure 8 is an example of a level adjustment screen displayed on the display 55;
Figure 9 is a block diagram illustrating a main control system of a hardness tester according to another embodiment of the present invention; and
Figure 10 is a schematic view illustrating the inclination of the body of a tester and forces acting on an indenter 41.

### DETAILED DESCRIPTION OF THE PREFERRED EMBODIMENTS

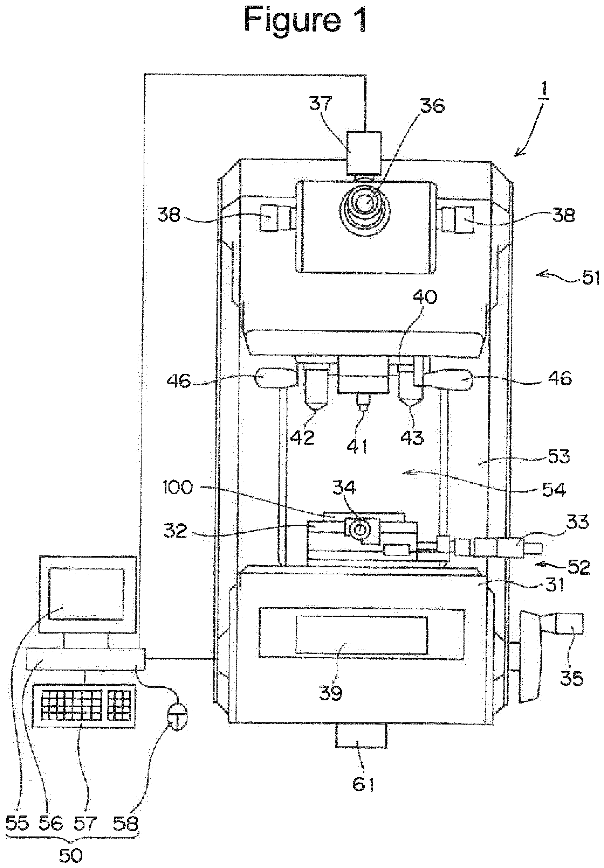

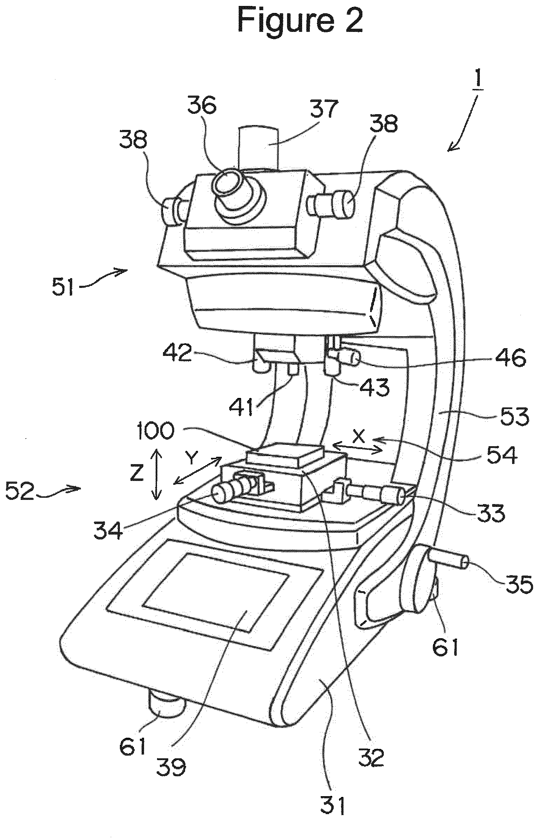

Embodiments of the present invention will now be described with reference to the drawings. Figure 1 is a schematic front view of a hardness tester according to the present invention. Figure 2 is a perspective view of a body portion 1.

The hardness tester pushes an indenter into a sample 100 with a predetermined test force and measures the size of indentations left in the sample 100 to perform material testing in which characteristics such as hardness of the sample 100 are evaluated. The body portion 1 of the hardness tester includes a base section 52 including a stage 32 on which the sample 100 is placed, a transfer mechanism and an input and display part 39 of the stage 32, and the like, an indentation observation section 51 including an indenter 41, objective lenses 42 and 43, a turret 40, an eyepiece 36, and the like, and a connecting section 53 connecting the base section 52 and the indentation observation section 51. The connecting section 53 has an opening 54.

The base section 52 includes the stage 32 disposed on top of a table 31 and configured to carry the sample 100. The stage 32 is configured to transfer the sample 100 in an X direction and in a Y direction orthogonal to the X direction, and is disposed such that the sample carrying surface is parallel to the top surface of the table 31. A micrometer knob 33 configured to transfer the sample 100 in the X direction and a micrometer knob 34 configured to transfer the sample 100 in the Y direction are attached to the stage 32. The stage 32 is a manual XY stage moved by operating the knobs 33 and 34. The stage 32 may also be an electric XY stage. Moreover, the stage 32 is configured to move up and down in a Z direction orthogonal to the X direction and the Y direction by the effect of a lifting handle 35.

The input and display part 39 is disposed in the front of the table 31. The input and display part 39 is composed of a liquid crystal display panel of a touch panel type, and displays various data such as test conditions and measurement results as well as input keys for inputting the various data. The input and display part 39 functions as input means and display means. Three leg portions 61 supporting the table 31 and thus supporting the body portion 1 of the hardness tester are disposed on the bottom surface of the table 31. One of the three leg portions 61 is disposed adjacent to the front of the table 31 in the vicinity of the middle, and two are disposed adjacent to the rear of the table 31. Note that the two leg portions 61 adjacent to the rear are not illustrated in Figure 1.

The body portion 1 is connected with a personal computer 50. A main unit 56 of the personal computer 50 is connected with a keyboard 57 and a mouse 58 serving as the input means, a display 55, and a camera 37. Control software for displaying images captured by the camera 37 on the display 55 and controlling operations of the body portion 1 of the hardness tester is installed on the main unit 56.

The eyepiece 36 for visually observing enlarged images of the surface of the sample 100 and a pair of knobs 38 used for moving the gauge during observation of the sample 100 using the eyepiece 36 are disposed in the indentation observation section 51. Moreover, the camera 37 capturing the images of the surface of the sample 100 is installed in the indentation observation section 51. The camera 37 sends the captured images of the surface of the sample 100 to the personal computer 50 as digital image data. The indentation left in the sample 100 is observed through the image data obtained by the camera 37, and the size is measured. The hardness of the surface of the sample 100 is then calculated based on the size of the indentation.

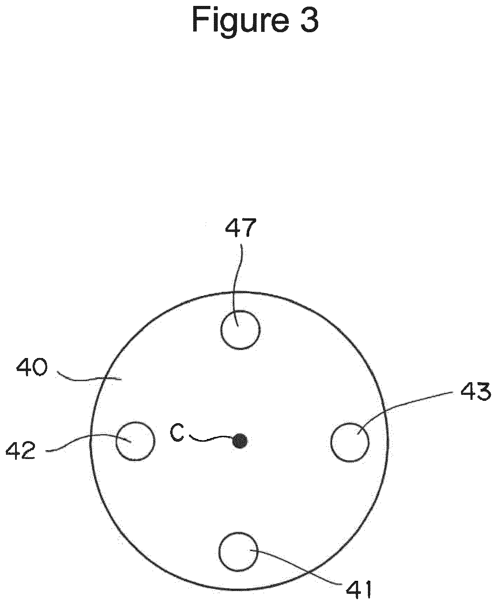

Figure 3 illustrates the arrangement of the objective lenses and the like supported by the turret 40.

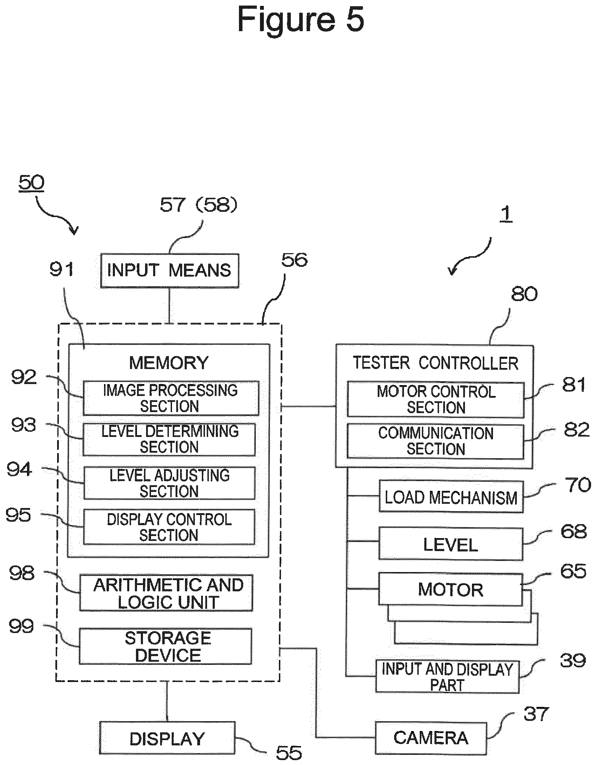

The indentation observation section 51 includes the indenter 41 and an indenter 47 to be pushed into the sample 100 with fixed test forces, a load mechanism 70 for adding the test forces to the indenters 41 and 47 (see Figure 5), the plurality of objective lenses 42 and 43, and the rotatable turret 40 supporting the indenter 41, the objective lenses 42 and 43, and the like (see Figure 1). The turret 40 rotates about a rotational axis C extending in the vertical direction by operating a knob 46.

The above-described indenter 41 is, for example, a Vickers indenter used for performing the Vickers hardness test on the sample 100, and the tip of the indenter 41 is a pyramid with a square base. On the other hand, the above-described indenter 47 is, for example, a Knoop indenter used for performing the Knoop hardness test on the sample 100, and the tip of the indenter 47 is a pyramid with a rhombus base. The shapes of the indenters 41 and 47 may be opposite. The indenters 41 and 47 of the hardness tester can be changed to Brinell indenters, which have spherical tips, for the Brinell hardness test. Although Figure 3 illustrates an example of the turret 40 on which the two indenters 41 and 47 and the two objective lenses 42 and 43 having different magnifications are disposed, the present invention is not limited to this. For example, two indenters and four objective lenses having different magnifications may be disposed on the turret.

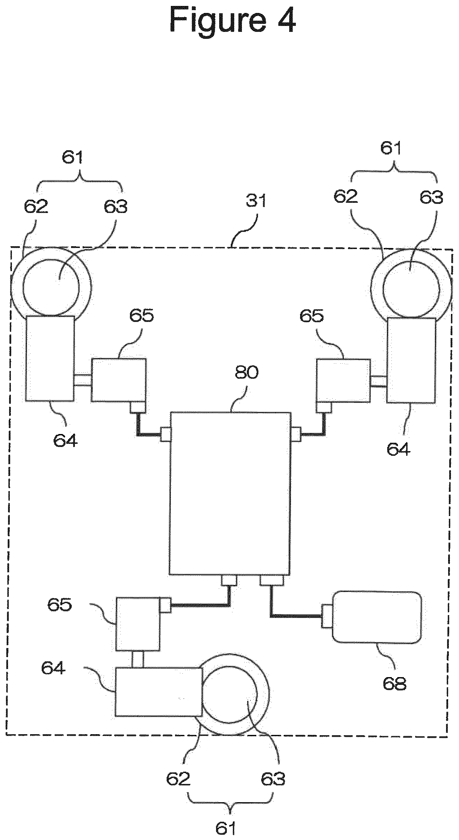

Figure 4 is a schematic view illustrating the configuration regarding inclination detection and level adjustment of the body portion 1.

The leg portions 61 supporting the body portion 1 of the hardness tester are attached to the bottom surface of the table 31. The body portion 1 is supported by the three leg portions 61 at three points, specifically, one adjacent to the front of the table 31 and one at each end of the table 31 adjacent to the rear. The leg portions 61 are composed of so-called adjuster bolts and each include a base 62 brought into contact with the floor and a screw part 63. Rotating the screw parts 63 allows the lengths of the leg portions 61 to be changed and thus the distance between the bottom surface of the table 31 and the mounting surface of the body portion 1 to be adjusted. Motors 65 for rotating the screw parts 63 in the leg portions 61 and gearboxes 64 connecting the shafts of the motors 65 and configured to transmit the power of the motors 65 to the screw parts 63 in the leg portions 61 via a plurality of built-in gears are disposed inside the table 31. The motors 65 are connected to the respective leg portions 61 via the respective gearboxes 64. Moreover, a level 68 serving as an inclination detector configured to detect the inclination of the body portion 1 is disposed inside the table 31.

The motors 65 are stepping motors of which rotational angles and rotational speeds can be controlled using pulse signals. Furthermore, the level 68 is a so-called digital level capable of measuring numerical values with a resolution of 0.001 mm/m. The level 68 is attached to be parallel to the top surface of the table 31 and detects the extent to which the top surface of the table 31 is inclined from the horizontal plane. This corresponds to measurement of the extent of inclination of the sample carrying surface of the stage 32 since the sample carrying surface of the stage 32 is parallel to the top surface of the table 31. In this example, the top surface of the table 31 serves as the reference plane used for determining whether the body portion 1 is horizontally placed. The reference plane is not limited to the above-described example. The surface to which the level 68 is attached may be considered as the reference plane, and the reference plane and the sample carrying surface of the stage 32 may be adjusted and secured to be parallel to each other in advance.

The motors 65 and the level 68 are connected to a tester controller 80. The tester controller 80 is a control circuit including memory storing programs, arithmetic and logic units such as an MPU (Micro Processing Unit), and the like arranged on a board. The value detected by the level 68 is input to the tester controller 80 and then output to the personal computer 50.

Figure 5 is a block diagram illustrating a main control system of the hardness tester according to the present invention.

The hardness tester includes, in the body portion 1, the tester controller 80 configured to control operations of the tester, and the tester controller 80 is connected to the main unit 56 of the personal computer 50 via a communication cable. The tester controller 80 and the main unit 56 of the personal computer 50 constitute a control unit of the present invention. The tester controller 80 is connected with driving systems of the input and display part 39 and the load mechanism 70. Moreover, a motor control section 81 and a communication section 82 in the tester controller 80 are blocks performing functions and are implemented by circuits mounted on the board. In this embodiment, the communication section 82 is a device controller compatible with the USB (Universal Serial Bus) data transfer protocol.

The main unit 56 of the personal computer 50 is connected with the keyboard 57 and the mouse 58 serving as the input means, the display 55, and, furthermore, the camera 37. The main unit 56 includes memory 91 such as ROM and RAM, an arithmetic and logic unit 98 such as a CPU (Central Processing Unit), and a storage device 99 connected to one another by buses. The memory 91 stores an image processing section 92, a level determining section 93, a level adjusting section 94, and a display control section 95 serving as function modules of programs. Each function is implemented by the arithmetic and logic unit 98 performing the corresponding program. The image processing section 92 digitally processes input from the camera 37 and stores image data in the storage device 99. The level determining section 93 receives input from the level 68 disposed inside the table 31 of the body portion 1 and determines the degree of inclination (serving as the extent of inclination and expressed by an angle from the horizontal plane) of the body portion 1, that is, the sample carrying surface of the stage 32. The level adjusting section 94 creates and outputs signals for controlling the motors 65 connected to the leg portions 61 in response to an operation request from a user via an input unit. Moreover, the display control section 95 controls display conditions such as display of captured images on the display 55 and arrangement of GUI parts on the screen. Here, the level adjustment performed by the level adjusting section 94 refers to reduction of the degree of inclination to zero or approximating the degree to zero to the extent possible.

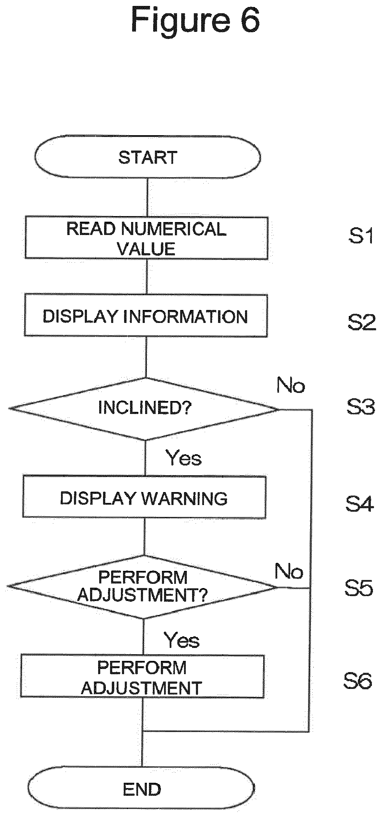

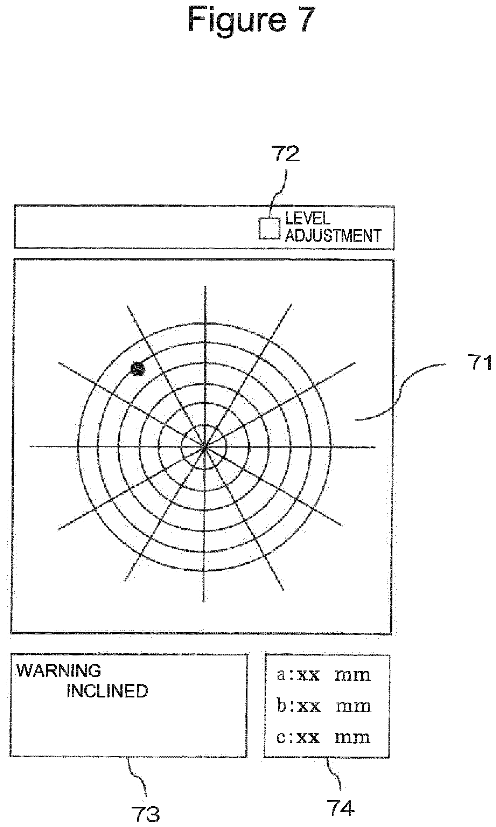

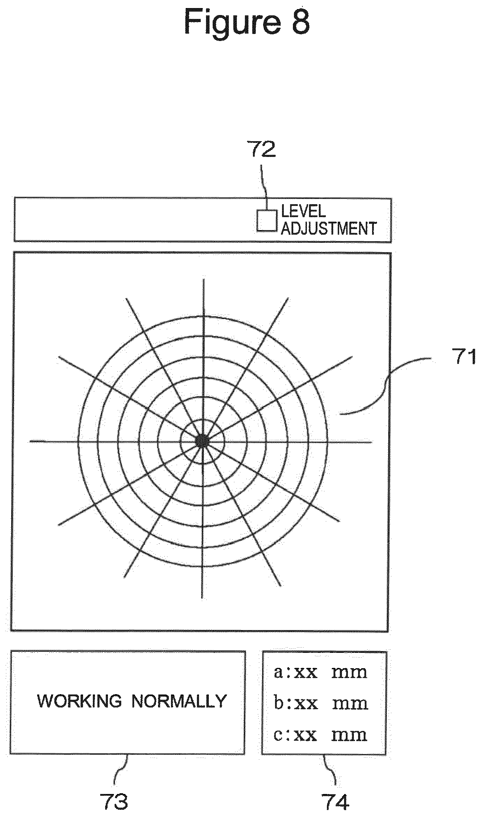

Operations of the inclination detection and level adjustment of the body portion 1 in the hardness tester with the above-described structure will now be described. Figure 6 is a flow chart illustrating the procedure of the level adjustment of the body portion 1. Figures 7 and 8 are examples of a level adjustment screen displayed on the display 55, operational buttons for inclination adjustment and inclination information being displayed on the screen.

First, to check the inclination of the body portion 1, a user starts the control software on the personal computer 50, selects level adjustment from a menu, and presses a button 72 using the mouse 58 within the level adjustment screen displayed on the display 55. This causes the numerical value from the level 68, that is, information about the current inclination of the body portion 1 to be read into the main unit 56 (step S1).

The inclination information input from the level 68 is displayed on the display 55 (step S2). As illustrated in Figure 7, the user is provided with the inclination information by a black dot plotted on a graphic element 71 mimicking a circular level and numerical values of the heights of the three leg portions 61 displayed in a numerical value display field 74. The distance between the black dot plotted in the graphic element 71 and the center of the circle indicates the degree of inclination, and the position of the black dot in the circumferential direction indicates the direction of inclination.

The inclination information input from the level 68 is used for inclination determination (step S3) performed by the level determining section 93. That is, in a case where it is determined that the numerical value input from the level 68 is greater than a predetermined threshold by executing the program of the level determining section 93, the body portion 1 is determined to be inclined, and a warning message such as "Inclined" is displayed in a result display field 73 as illustrated in Figure 7 (step S4). Since the detection value is output from the level 68 at predetermined intervals, monitoring of the degree of inclination of the body portion 1 according to the inclination determination based on the detection value of the level 68 may be performed at all times.

While the warning message is displayed in the result display field 73, a dialog asking whether to perform level adjustment is displayed. In a case where the user selects Yes (step S5), the level adjustment of the body portion 1 is performed (step S6). The level adjustment of the body portion 1 may be performed without displaying the dialog asking whether to perform the level adjustment when the user presses the button 72 again from among the GUI parts displayed in the display 55 using the mouse 58 while the warning message is displayed in the result display field 73. Moreover, step S5 may be omitted, and the level adjustment may be performed without asking whether to perform the level adjustment.

During the level adjustment, correction values of the heights of the respective leg portions 61 are determined, and pulse signals serving as the control signals driving the motors 65 are created based on the inclination information input from the level 68 by the effect of the level adjusting section 94. When the pulse signals are input to the motor control section 81 of the tester controller 80, each of the motors 65 is driven, and the height of each leg portion 61 is changed. When the black dot is moved and plotted in the vicinity of the center of the graphic element 71 as illustrated in Figure 8, the description displayed in the result display field 73 is changed to indicate that the tester is in a normal condition and that a test can be performed.

In the above-described embodiment, the heights of the three leg portions 61 can be changed by the respective motors 65. However, for example, the length of one of the leg portions 61 may be fixed. Moreover, the number of leg portions 61 may be four or more.

Yet moreover, in this embodiment, the level determining section 93 and the level adjusting section 94 serving as functional compositions performing the level determination and the level adjustment, respectively, of the body portion 1 are provided for the personal computer 50. However, the level determining section 93 and the level adjusting section 94 may be provided for the tester controller 80, and information about the inclination of the body portion 1 may be displayed in the input and display part 39. Furthermore, in this embodiment, the tester controller 80, which controls the entire tester, is provided with the function of level adjustment. However, the function of receiving the signal from the level 68 and the control function of driving the motors 65 may be provided for another controller prepared separately from the tester controller 80.

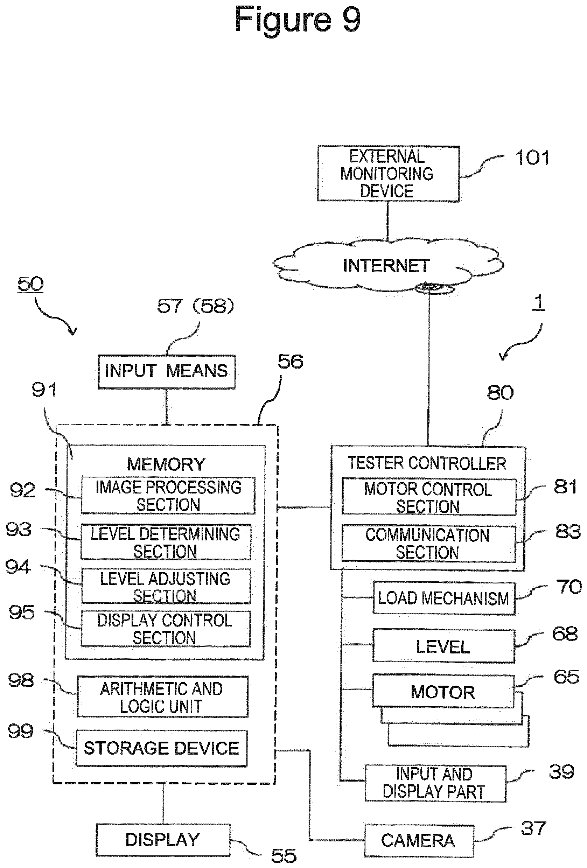

Figure 9 is a block diagram illustrating a main control system of a hardness tester according to another embodiment of the present invention. The same reference numerals and symbols are used for components similar to those of the embodiment illustrated in Figure 5, and the detailed descriptions will be omitted.

In this embodiment, a communication section 83 of the tester controller 80 includes a network controller capable of executing protocol processing required for Internet connections in addition to the USB device controller for communicating with the personal computer 50. In this embodiment, the tester controller 80 in the body portion 1 can be connected with an external monitoring device 101 via the Internet.

The external monitoring device 101 is composed of, for example, a personal computer provided with a display device and an input device. Control software for the hardness tester is installed in the external monitoring device 101, and starting the control software enables the acquisition of the detection value of the level 68 via the Internet and display of the inclination information as illustrated in Figures 7 and 8 on the display device of the external monitoring device 101. The external monitoring device 101 is not necessarily a personal computer and may be a combination of a computer (server), connected with a network acquiring the inclination information via the Internet and providing the control software for the hardness tester together with the inclination information, and a communication terminal provided with a display device. In this case, the inclination information, software package, and the like are supplied to the terminal provided with the display device such as a personal computer or a tablet terminal via the Internet, and the inclination information as illustrated in Figures 7 and 8 is displayed on the display device, allowing the user to monitor the inclination of the body of the tester.

### Reference Signs List

- 1: Body portion
- 31: Table
- 32: Stage
- 36: Eyepiece
- 37: Camera
- 39: Input and display part
- 40: Turret
- 41: Indenter
- 42: Objective lens
- 43: Objective lens
- 47: Indenter
- 49: Indenter shaft
- 50: Personal computer
- 51: Indentation observation section
- 52: Base section
- 53: Connecting section
- 54: Opening
- 55: Display
- 61: Leg portion
- 62: Base
- 63: Screw part
- 64: Gearbox
- 65: Motor
- 68: Level
- 71: Graphic element
- 72: Button
- 73: Result display field
- 74: Numerical value display field
- 80: Tester controller
- 81: Motor control section
- 82: Communication section
- 91: Memory
- 92: Image processing section
- 93: Level determining section
- 94: Level adjusting section
- 95: Display control section
- 98: Arithmetic and logic unit
- 99: Storage device
- 100: Sample
- 101: External monitoring device

## Claims

1. A hardness tester for evaluating a characteristic of a sample placed on a stage disposed in a body portion by pushing an indenter into the sample with a predetermined test force, the hardness tester comprising:
a plurality of leg portions disposed on a bottom surface of the body portion;
motors each connected to one of the plurality of leg portions to change a length of each of the plurality of leg portions;
an inclination detector configured to detect inclination of the body portion; and
a control unit including a level adjusting section and a motor control section, the level adjusting section determining a degree of inclination of the body portion based on a value detected by the inclination detector and creating a control signal for the motors to perform level adjustment of the body portion, the motor control section being configured to drive the motors based on the control signal output from the level adjusting section to perform the level adjustment of the body portion.

2. The hardness tester according to claim 1, wherein
the control unit displays information about the inclination of the body portion based on the value detected by the inclination detector on a display.

3. The hardness tester according to claim 2, wherein
the control unit includes a communication section configured to output the value detected by the inclination detector to an external monitoring device via a network.
